Europäisches Patentamt

**European Patent Office**

Office européen des brevets

(11) Publication number : **0 333 396 B1**

(12) # EUROPEAN PATENT SPECIFICATION

(45) Date of publication of patent specification :
**08.07.92 Bulletin 92/28**

(21) Application number : **89302427.3**

(22) Date of filing : **13.03.89**

(51) Int. Cl.⁵ : **D06N 7/00,** B32B 3/28, A47G 27/02

(54) **Carpet underlay.**

(30) Priority : **15.03.88 GB 8806066**

(43) Date of publication of application :
**20.09.89 Bulletin 89/38**

(45) Publication of the grant of the patent :
**08.07.92 Bulletin 92/28**

(84) Designated Contracting States :
**AT BE CH DE ES FR GB GR IT LI LU NL SE**

(56) References cited :
**GB-A- 2 152 875**
**GB-A- 2 206 079**
**US-A- 4 112 176**

(73) Proprietor : **The Gates Rubber Company Limited**
**NCR House 5th Floor 2 Roseburn Gardens**
**Edinburgh, EH12 5NJ Scotland (GB)**

(72) Inventor : **Moore, Travis**
**Rowan Lodge Boatrigg**
**Auldgirth Dumfries DG2 0XP Scotland (GB)**
Inventor : **Matthews, Bernard Richard**
**4 Baxter Court Heathhall**
**Dumfries DG1 3RY Scotland (GB)**

(74) Representative : **Geldard, David Guthrie et al**
**URQUHART-DYKES AND LORD Tower House**
**Merrion Way**
**Leeds West Yorkshire LS2 8PA (GB)**

Jouve, 18, rue Saint-Denis, 75001 PARIS

EP 0 333 396 B1

## Description

This invention relates to carpet underlay.

Underlays provide enhanced wear and appearance retention for carpets, and are therefore used in a widespread manner. Carpet is commonly loose-laid over underlay, but this is not particularly suitable in areas that are subject to heavy wear, because carpet made to modern practices tends to be dimensionally unstable. One solution newly adopted in the contract carpet trade is to adhere the underlay to the floor, and then to adhere the carpet to the top surface of the underlay.

The most commonly used underlays now incorporate a resilient sheet of an elastomeric composition, that may for example be a sheet of crumb rubber or a sheet of foam or sponge rubber. For crumb and sponge rubbers the composition will generally contain oil that has been necessary to the earlier processing of the composition. In loose-laid carpet arrangements that oil does not present any problem. However, when carpet is fully adhered to the top surface of the underlay the polymeric adhesive that is generally used provides a medium that allows migration of oil from the resilient sheet. This migration can have a deleterious effect on the latex composition commonly used in carpet construction, and can lead to premature adhesive failure.

Problems also arise in fully adhered systems when it is necessary to replace the carpet and underlay. The adhesives usually chosen for this system are such that the carpet will remain bonded to the underlay, but the underlay will peel from the adhesive that has been applied to the floor. This can generally be achieved successfully, but in areas where the carpet and underlay are subjected to significant point loads it can be difficult to get clean release. In these regions, therefore, there is a tendency for the underlay to tear and for part of the underlay material to remain adhered to the floor. The torn material must be removed before new carpet and underlay can be applied.

The invention seeks to provide an underlay construction which can be used to overcome either the problem of oil migration, or the problem of underlay release or both these problems.

According to the invention a carpet underlay comprises a resilient sheet of an oil-containing elastomeric composition, and a continuous barrier sheet overlying the whole of a first surface of the resilient sheet, the barrier sheet being impermeable to the oil in the elastomeric composition.

In one method of use, the underlay is laid so that the barrier sheet is above the resilient sheet. Thus, when a carpet is laid over the underlay, even if adhered to the underlay by a polymeric adhesive, there can be no possibility of oil migrating from the resilient sheet, as such migration is prevented by the barrier sheet.

In another method of use the underlay is laid so that the barrier sheet is below the resilient sheet and in direct contact with the adhesive that has been applied to the floor. By suitable selection of the material for the barrier sheet its presence in this position can significantly facilitate release of the underlay from the floor adhesive, even when the underlay has been subjected to heavy point loads.

The barrier sheet may be directly adhered or otherwise bonded to the first surface of the resilient sheet, and it may then have greater dimensional stability than the resilient sheet, so that it acts as the necessary backing material that is capable of withstanding tensile forces experienced by the underlay.

It is generally more preferable, however, to include in the underlay a stabilising sheet separate from the barrier sheet, the stabilising sheet having greater dimensional stability than the resilient sheet. In such constructions, when oil migration is to be prevented, the barrier sheet may be sandwiched between the stabilising sheet and the resilient sheet and adhered or otherwise bonded to both of those sheets. Alternatively, the stabilising sheet may be sandwiched between the barrier sheet and the resilient sheet and adhered or otherwise bonded to both of those sheets. The underlay may then be used with the barrier sheet uppermost to prevent oil migrating towards an overlying carpet, or with the barrier sheet lowermost, to assist release from an adhesive-coated floor. Generally speaking, such three-layer arrangements will be preferred, as each layer may then be formulated and/or constructed to give the optimum performance required from that particular layer without the need to strike a balance between possibly conflicting requirements.

In another embodiment of the invention a second barrier sheet overlies the whole of a second surface of the resilient sheet. The second barrier sheet may also be impermeable to the oil in the elastomeric composition, or may have a degree of permeability to that oil, being formulated so that it may give the required release properties from an adhesive-coated floor. The second barrier sheet may have the further advantage of providing additional dimensional stability to the underlay.

The barrier sheet may conveniently be a sheet of polymeric material, and may for example be of polyethylene, polypropylene, polyamide or polyester material. The thickness of the barrier sheet may vary within wide ranges, but it is preferred that the sheet be from 15 to 100 $g/m^2$, with a probable preferred range of 30 to 50 $g/m^2$. The thickness should be sufficient to form a totally continuous film, and to avoid problems during handling and manufacture, but not too thick to be unduly bulky and expensive.

A second barrier sheet, when provided, may be similar to the first barrier sheet, or if it is not required to be oil impervious it may be formed from such materials as a spun-bonded polyester or polypropylene fabric, or a coating of a flock material.

Many types of stabilising sheet are known in underlay constructions, and any of these can be used in the underlay of the invention. For example, woven or non-woven scrims or fabrics form one common class of stabilising sheet. Another type of stabilising sheet, and the preferred one for the underlay of the invention, is a creped paper reinforced by weft threads laid in parallel rows on the paper in the general direction of the crimps therein, the weft threads being secured to the paper by a series of side-by-side rows of stitches in a direction transverse to the direction of the crimps.

The resilient sheet is preferably a sheet of sponge rubber, which may be formed to have a textured or waffle-like surface, or may be a simple substantially flat sheet. The resilient sheet will be of a thickness and composition so as to give the required degree of resilience.

The various sheets that go to make up the underlay of the invention are, as has already been stated, desirably adhered together. The usual method of making the underlay of the invention will be to pass the sponge rubber through a curing oven, the rubber being supported by a conveyor during the curing process. The barrier sheet or sheets and/or the resilient sheet are brought into contact with the rubber, and it or they must remain effectively secured thereto so that the final composite underlay may be lifted from the conveyor. This requires a firm bond between the layers as there is a degree of adhesion between the rubber and the conveyor that must be broken to achieve separation of the underlay from the conveyor. At the point of separation the materials will still generally be close to the oven temperature of about 150° C.

Accordingly, the adhesive used between the different layers should be capable of maintaining cohesion and adhesive strength at temperatures of from 100°C to 130°.

A number of different types of thermoplastic adhesives are usable, and these may be summarised as follows:-

co-polymers of ethylene with an unsaturated acid, for example, acrylic or methacrylic acid, in which the acid is partially neutralised by a source of zinc or sodium ions;

co-polymers of ethylene and an unsaturated acid such as acrylic or methacrylic acid, or co-polymers closely related to these;

co-polymers of ethylene and vinyl-acetate having a vinyl-acetate content of at least 17%;

polyesters, polyamides and block styrene-butadiene rubbers, and similar polymers well known in the art of hot melted adhesives;

compounded materials of any of the above four types of polymer, the compound containing tackifying resins, such as terpene or cumine, anti-coagulating agents as in the form of any of the waxes well-known for this purpose, or other ingredient modifying the polymer to give the required characteristics or to retain the characteristics at the required level while lowering the effective cost.

Examples of the first group are certain of the materials available from Du Pont under the trade mark SURLYN; examples of the second group are materials available from Du Pont under the trade names NU-CREL or ELVAX 11; examples of the third group are ELVAX materials available from Du Pont or materials available from ICI under the trade name EVATANE; and representatives of the fourth group are KRATON or SBS block styrene-butadiene rubbers. It is presently preferred to use for the adhesive film a material having a Vicat softening point not exceeding 65°C, and desirably not less than 25°C. Vicat softening points given in this specification are measured in accordance with ASTM D1525.

GB-A-2152875, the entire contents of which are herein incorporated by reference, deals with the manufacture of an underlay comprising a stitch-reinforced crepe paper backing and a resilient sponge rubber sheet, the two being joined together by an adhesive as aforesaid, the adhesive having been laminated to a surface of the crepe paper before the paper is brought into contact with the hot rubber of the resilient sheet.

A similar technique may be used in the present invention. Thus, a barrier sheet as supplied for incorporation into the underlay may be a laminate comprising a layer of oil-impermeable material and a layer of adhesive. The two layers may conveniently be formed together by a co-extrusion process. Underlay may then be made by placing the adhesive side of the barrier sheet onto the hot rubber leaving the oven. If a single barrier sheet is also the sheet giving the required dimensional stability to the product then this two-layer structure will suffice. However, if a stabilising sheet is also required then this may be laid with an adhesive side on the top of the barrier sheet so that the requisite three-layer structure is formed. Obviously, the order of the barrier sheet and stabilising sheet may be reversed, with an adhesive surface of the stabilising sheet then being laid onto the rubber, and an adhesive surface of the barrier sheet laid onto the stabilising sheet. In another method for making the three-layer structure the stabilising sheet is not pre-coated with an adhesive layer, and the barrier sheet is formed with adhesive layers on each side of the oil-impermeable layer. Again, this three-layer structure could be made by a co-extrusion process. The underlay is then formed by laying the barrier sheet onto the resilient sheet and then laying the stabilising sheet onto the barrier sheet, the two layers of adhesive then acting to secure the three sheets together.

Obviously a second barrier sheet may be similarly constituted by a laminate of oil impermeable material and adhesive.

The invention will be better understood from the following description of a method of manufacturing an underlay, and of various forms of underlay, given in accordance with the accompanying drawings in which:-

Figure 1 is a schematic side elevation of apparatus used in underlay manufacture;

Figure 2 is a cross-section through underlay formed using the apparatus of figure 1; and

Figures 3 to 6 are cross-sections of alternative forms of underlay according to the invention.

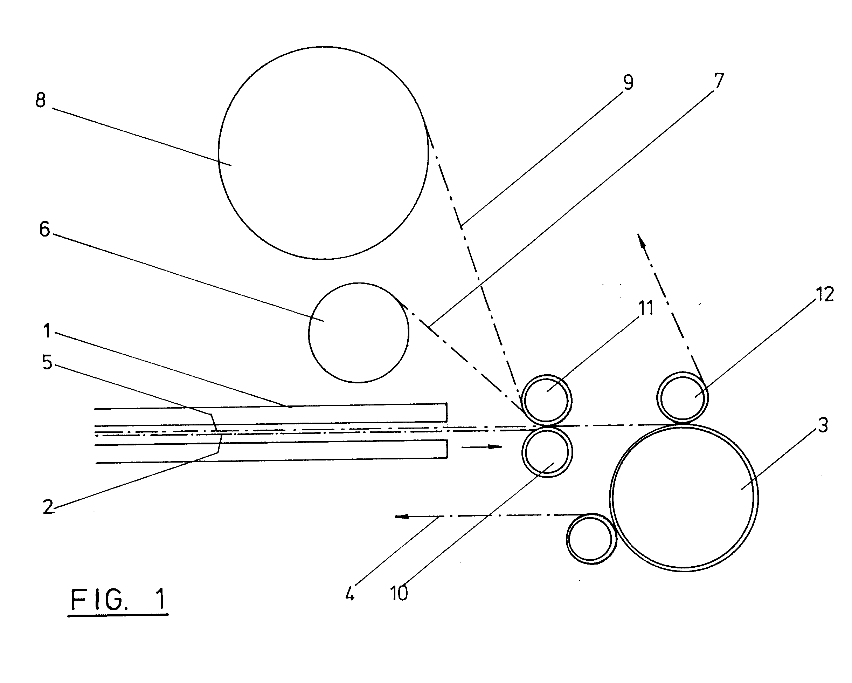

Referring to figure 1 this illustrates a process wherein a sheet of rubber composition is laid onto an endless conveyor 2 in advance of an oven 1. The rubber takes on the pattern of the conveyor surface and during passage of the rubber through the oven the heat activates blowing and curative agents incorporated in the rubber, so creating a cured sponge rubber sheet 5. The rubber composition may be any composition that will have the required strength and resilience properties. In one preferred example the rubber was a sponge rubber composition containing 100 parts by weight of solution styrene-butadiene rubber containing block styrene sequences, 50 to 100 parts of process oil, 200 to 400 parts of filler, for example calcium carbonate, and 10 to 15 parts of curing agent, blowing agent and other additives. This composition is cured and blown to a thickness of 0.2 to 0.5 inch (1 inch = 2.54 cm) on passage through the oven.

Adjacent to the exit from the oven there is supported a first roller 6 from which a barrier sheet 7 is fed, and a further roller 8 from which a stablising sheet 9 is fed, the barrier sheet being sandwiched between the stabilising sheet and the rubber.

The barrier sheet, in the aforesaid preferred example, was formed by co-extruding Surlyn 1702 at 10g/m$^2$ on each side of polyethylene layer of 40 g/m$^2$. Surlyn 1702 is an oil-impermeable material available from Du Pont. The material has a Vicat softening point of 61° C measured in accordance with ASTM 1525-70 Rate B, a melt flow index of 14, heat deflection temperature at 0.46 mpa of 40° C measured in accordance with ASTM D648 and excellent hot-tack.

The stablising sheet used in the example was a reinforced paper manufactured by feeding creped papers to a stitch-bonding machine in which weft threads are laid in rows on the paper generally parallel to the crimps therein, the weft threads being secured to the paper by rows of stitching extending lengthwise of the material and generally transversed to the crimps in the creped paper and to the weft threads. The actual paper used was creped Kraft paper of 70 to 120 g/m$^2$, reinforced with polyester Malimo stitching.

The three layers are brought into contact in a nip formed between a backing roller 10 and a nip roller 11. The residual heat in the rubber sheet material is sufficient to soften both layers of adhesive and this, combined with the pressure applied in the nip causes the adhesive to adhere the barrier sheet to the rubber sheet and the stabilising sheet to the barrier sheet. The resultant underlay then travels on the conveyor 2 to a return roller 3 at which point the underlay is lifted from the conveyor by a further roller 12 and is passed to a cooling and winding arrangement.

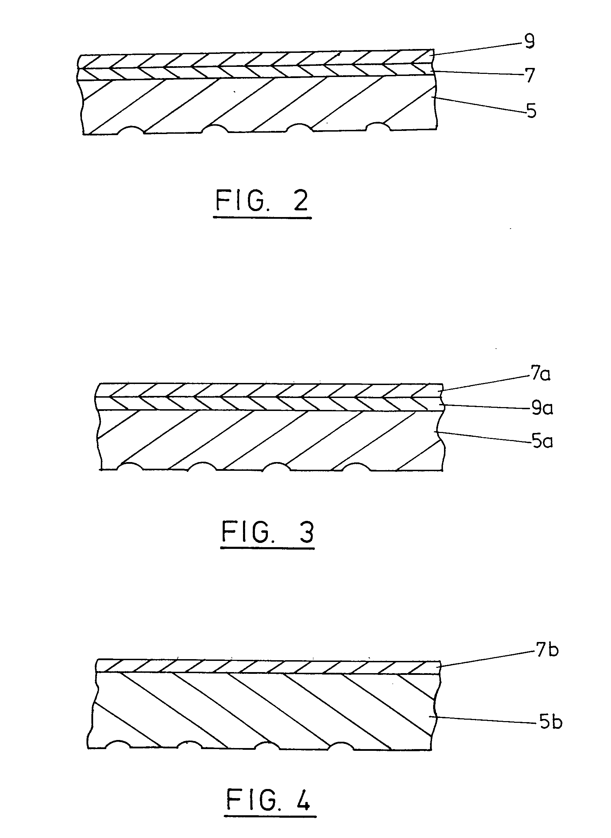

The resultant underlay is shown in figure 2, comprising the barrier sheet 7 adhered in position between the rubber sheet 5 and the stabilising sheet 9. Using the materials as aforesaid it has been found that an excellent underlay is produced, with no danger of process oil migrating from the rubber into the adhesive layer that binds a carpet to the underlay.

It will be appreciated that alternative manufacturing arrangements are possible; for example the barrier sheet, the stabilising sheet and the rubber may be brought into contact at the entry to the oven, rather than at the exit therefrom.

Figure 3 shows an alternative form of underlay according to the invention, wherein a stabilising sheet 9a is sandwiched between a resilient sheet 5a and a barrier sheet 7a. This embodiment may be manufactured in a manner similar to that illustrated in figure 1, either using a stabilising sheet that has been pre-coated on each side thereof with a suitable adhesive, or a stabilising sheet coated with adhesive on its lower side only, together with a barrier sheet also coated with adhesive on its lower side only. The materials used may be similar to those already described.

Figure 4 shows yet another arrangement, wherein the underlay utilises a barrier sheet 7b that is directly adhered to a resilient sheet 5b. In this embodiment the material of the barrier sheet is chosen to be such as to give sufficient dimensional stability to the finished underlay, without the need to incorporate a separate stabilising sheet.

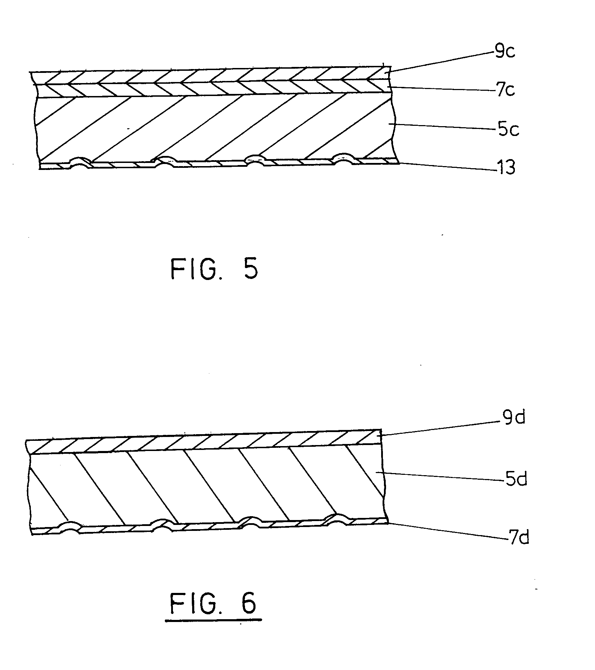

Figure 5 shows yet another embodiment, which is a modification of the arrangement shown in figure 2, the underlay thus comprising a resilient sheet 5c, a barrier layer 7c and a stabilising layer 9c. The modification is the addition of a second barrier layer 13 to the underside of the construction. The second barrier layer 13 may be a polyethylene or other oil-impervious layer similar to that used for the top barrier layer 7b, the layer 13 having its upper surface coated with adhesive and being supplied from a further roller located below the oven so that the layer is drawn into the nip between rollers 10 and 11, with the adhesive side being brought into contact with the hot rubber sheet. With the underlay laid so that sheet 13 is in contact with adhesive covering a floor it is found that the adhesion to the floor is sufficient to hold the underlay in place, yet allows the underlay to release cleanly from the floor when it is lifted. Carpet is secured above the underlay by adhesive between the underlay and the carpet, and the top barrier layer effectively prevents any oil migration into that adhesive.

In another arrangement the lower barrier sheet need not be oil-impervious, and materials such as spun-bonded polyester or polypropylene fabrics, or flock coatings may be used.

It will be understood that the embodiments of underlay shown in figures 3 and 4 may also be modified by the addition of a lower barrier layer similar to the layer 13 shown in figure 5.

Figure 6 shows a further embodiment of underlay according to the invention, comprising a cured resilient rubber sheet 5d having a barrier layer 7d adhered to the lower surface thereof and a stabilising layer 9d adhered to the upper surface thereof. Underlay of this type will have the property of being releasable from an adhesive-coated floor, but there will be a tendency for oil to migrate into the adhesive used to adhere a carpet to the underlay, so that the construction is not as preferred as that of the other embodiments.

## Claims

1. A carpet underlay comprising a resilient sheet of an oil-containing elastomeric composition and a continuous barrier sheet overlying the whole of a first surface of the resilient sheet, the barrier sheet being impermeable to the oil in the elastomeric composition.

2. A carpet underlay according to claim 1 in which the barrier sheet is in direct contact with the first surface of the resilient sheet.

3. A carpet underlay according to claim 1 or claim 2 in which the barrier sheet has greater dimensional stability than the resilient sheet.

4. A carpet underlay according to claim 1 and including a stabilising sheet having greater dimensional stability than the resilient sheet.

5. A carpet underlay according to claim 4 in which the stabilising sheet is a creped paper reinforced by weft threads laid in parallel rows on the paper in the general direction of the crimps therein, the weft threads being secured to the paper by a series of side-by-side rows of stitches in a direction transverse to the direction of the crimps.

6. A carpet underlay according to claim 4 or claim 5 in which the barrier sheet is sandwiched between the first surface of the resilient sheet and the stabilising sheet.

7. A carpet underlay according to claim 4 or claim 5 in which the stabilising sheet is sandwiched between the first surface of the resilient sheet and the barrier sheet.

8. A carpet underlay according to any one of the preceding claims in which a second barrier sheet overlies the whole of a second surface of the resilient sheet.

9. A carpet underlay according to claim 8 in which the second barrier sheet is in direct contact with the second surface of the resilient sheet.

10. A carpet underlay according to claim 8 or claim 9 in which the second barrier sheet is impermeable to the oil in the elastomeric composition.

11. A carpet underlay according to any one of the preceding claims in which the or each barrier sheet is a sheet of polymeric material, preferably having a weight of from 15 to 100 g/m².

12. A carpet underlay according to any one of the preceding claims in which at least one pair of immediately adjacent sheets are bonded one to the other by an adhesive capable of maintaining cohesion and adhesive strength at temperatures of from 100°C to 130°C.

## Patentansprüche

1. Teppich-Unterlage, gekennzeichnet durch eine elastische Folie aus einer ölhaltigen, elastomeren Zusammensetzung und durch eine ununterbrochene Sperrfolie über dem gesamten Bereich einer ersten Oberfläche der elastischen Folie, wobei die Sperrfolie undurchlässig für das in der elastomeren Zusammensetzung enthaltene Öl ist.

2. Teppich-Unterlage nach Anspruch 1, dadurch gekennzeichnet, daß die Sperrfolie in direktem Kontakt mit der ersten Oberfläche der elastischen Folie ist.

3. Teppich-Unterlage nach Anspruch 1 oder 2, dadurch gekennzeichnet, daß die Sperrfolie eine größere Maßstabilität als die elastische Folie aufweist.

4. Teppich-Unterlage nach Anspruch 1, gekennzeichnet durch eine Stabilisierungsfolie von einer größeren Maßstabilität als die der elastischen Folie.

5. Teppich-Unterlage nach Anspruch 4, dadurch gekennzeichnet, daß die Stabilisierungsfolie ein Krepp-Papier ist, das durch parallel in Richtung der Kräuselung des Krepp-Papiers angeordnete Schußfäden verstärkt ist, die durch eine Reihe von nebeneinanderliegenden Stichen quer zur Richtung der Kräuselung mit dem Krepp-Papier befestigt sind.

6. Teppich-Unterlage gemäß Anspruch 4 oder 5, dadurch gekennzeichnet, daß die Sperrfolie zwischen der ersten Oberfläche der elastischen Folie und der Stabilisierungsfolie liegend mit diesen verbunden ist.

7. Teppich-Unterlage nach Anspruch 4 oder 5, dadurch gekennzeichnet, daß die Stabilisierungsfolie zwischen der ersten Oberfläche der elastischen Folie und der Sperrfolie liegend mit diesen verbunden ist.

8. Teppich-Unterlage nach einem der vorhergehenden Ansprüche, dadurch gekennzeichnet, daß eine zweite über den gesamten Bereich der zweiten Oberfläche der elastischen Folie liegende Sperrfolie vorgesehen ist.

9. Teppich-Unterlage nach Anspruch 8, dadurch gekennzeichnet, daß die zweite Sperrfolie in direkter Berührung mit der zweiten Oberfläche der elastischen Folie angeordnet ist.

10. Teppich-Unterlage nach Anspruch 8 oder 9, dadurch gekennzeichnet, daß die zweite Sperrfolie undurchlässig für das in der elastomeren Zusammensetzung enthaltene Öl ist.

11. Teppich-Unterlage nach einem der vorhergehenden Ansprüche, dadurch gekennzeichnet, daß die oder jede der elastischen Sperrfolien aus einem vorzugsweise ein Gewicht von 15 bis 100 g/m$^2$ aufweisendes Polymer-Material besteht.

12. Teppich-Unterlage nach einem der vorhergehenden Ansprüche, dadurch gekennzeichnet, daß mindestens ein Paar der unmittelbar nebeneinanderliegenden Folien mittels eines die Spaltfestigkeit und Klebekraft bei Temperaturen von 100°C bis 130°C aufrechterhaltenden Klebers verklebt sind.

## Revendications

1. Thibaude comprenant une nappe élastique d'une composition élastomère contenant de l'huile et une nappe continue de barrage superposée à la totalité d'une première surface de la nappe élastique, la nappe de barrage étant imperméable à l'huile de la composition élastomère.

2. Thibaude selon la revendication 1, dans laquelle la nappe de barrage est en contact direct avec la première surface de la nappe élastique.

3. Thibaude selon la revendication 1 ou la revendication 2, dans laquelle la nappe de barrage a une stabilité dimensionnel le plus grande que la nappe élastique.

4. Thibaude selon la revendication 1, comprenant une

nappe stabilisatrice ayant une stabilité dimensionnelle plus grande que la nappe élastique.

5. Thibaude selon la revendication 4, dans laquelle la nappe stabilisatrice est constituée d'un papier graufré renforcé par des fils de trame disposés en rangées parallèles dans la direction générale des crépures, les fils de trame étant fixés au papier par une série de rangées côte-à-côte de points transversalement à la direction des crépures.

6. Thibaude selon la revendication 4 ou la revendication 5 dans laquelle la nappe de barrage est intercalée entre la première surface de la nappe élastique et la nappe stabilisatrice.

7. Thibaude selon la revendication 4 ou la revendication 5 dans laquelle la nappe stabilisatrice est intercalée entre la première surface de la nappe élastique et la nappe de barrage.

8. Thibaude selon l'une quelconque des revendications précédentes, dans laquelle une seconde nappe de barrage est superposée à la totalité d'une seconde surface de la nappe élastique.

9. Thibaude selon la revendication 8, dans laquelle la seconde nappe de barrage est en contact direct avec la seconde surface de la nappe élastique.

10. Thibaude selon la revendication 8 ou la revendication 9 dans laquelle la seconde nappe de barrage est imperméable à l'huile de la composition élastomère.

11. Thibaude selon l'une quelconque des revendications précédentes dans laquelle la ou chaque nappe de barrage est une nappe de matière polymérique, ayant de préférence un poids de 15 à 100 g/m$^2$.

12. Thibaude selon l'une quelconque des revendications précédentes, dans laquelle au moins deux nappes immédiatement voisines sont liées l'une à l'autre par un adhésif susceptible de maintenir la cohésion et la force d'adhérence à des températures allant de 100°C à 130°C.

EP 0 333 396 B1

FIG. 1

## FIG. 2

## FIG. 3

## FIG. 4

9c

7c

5c

13

FIG. 5

9d

5d

7d

FIG. 6